(19) Europäisches Patentamt / European Patent Office / Office européen des brevets

(11) **EP 3 474 055 B1**

(12) **FASCICULE DE BREVET EUROPEEN**

(45) Date de publication et mention
de la délivrance du brevet:
**02.11.2022 Bulletin 2022/44**

(21) Numéro de dépôt: **18200430.9**

(22) Date de dépôt: **15.10.2018**

(51) Classification Internationale des Brevets (IPC):
**G02B 7/183** *(2021.01)*    **G02B 17/06** *(2006.01)*
**G02B 23/06** *(2006.01)*    **G02B 23/16** *(2006.01)*

(52) Classification Coopérative des Brevets (CPC):
**G02B 7/183; G02B 17/0631; G02B 23/06;
G02B 23/16**

(54) **TÉLESCOPE DE TYPE KORSH AMÉLIORÉ**

VERBESSERTES TELESKOP VOM TYP KORSCH-TELESKOP

IMPROVED KORSCH TYPE TELESCOPE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.10.2017 FR 1701087**

(43) Date de publication de la demande:
**24.04.2019 Bulletin 2019/17**

(73) Titulaire: **Thales
92400 Courbevoie (FR)**

(72) Inventeurs:
• **TETAZ, Nicolas
06156 CANNES LA BOCCA (FR)**
• **GOURILLON, François-Régis
06150 CANNES LA BOCCA (FR)**

(74) Mandataire: **Atout PI Laplace
Immeuble "Visium"
22, avenue Aristide Briand
94117 Arcueil Cedex (FR)**

(56) Documents cités:
FR-A- 932 048     US-A- 3 443 853
US-A- 4 413 177     US-A- 5 181 145

• **HO-SOON YANG ET AL: "Development of
Cassegrain type 0.9-m collimator",
PROCEEDINGS OF SPIE, vol. 5869, 18 août 2005
(2005-08-18), page 586913, XP055498043, 1000
20th St. Bellingham WA 98225-6705 USA ISSN:
0277-786X, DOI: 10.1117/12.616174 ISBN:
978-1-5106-1533-5**

**Description**

**DOMAINE DE L'INVENTION**

Le domaine de l'invention est celui des télescopes, notamment celui des télescopes d'observations embarqués dans des satellites. Plus précisément, le domaine de l'invention concerne les systèmes catoptriques à grandes focales de type Korsh.

**ETAT DE LA TECHNIQUE**

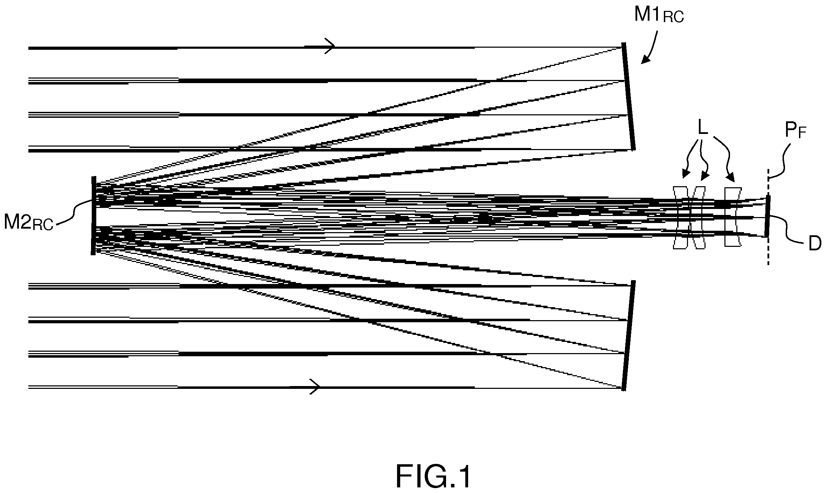

Historiquement les premiers télescopes utilisés étaient de type Ritchey-Chrétien, comprenant deux miroirs $M1_{RC}$ concave et $M2_{RC}$ convexe et ensemble de lentilles disposée devant le plan focal $P_F$ comprenant le détecteur D, tel qu'illustré figure 1. Les lentilles sont sensiblement de la taille du détecteur, ce qui limite celui -ci à 200 - 300 mm environ.

Ces télescopes sont très compacts mais l'utilisation de lentilles limite le champ atteignable, et un télescope Ritchey-Chrétien a généralement un champ linéaire inférieur à 0.8°.

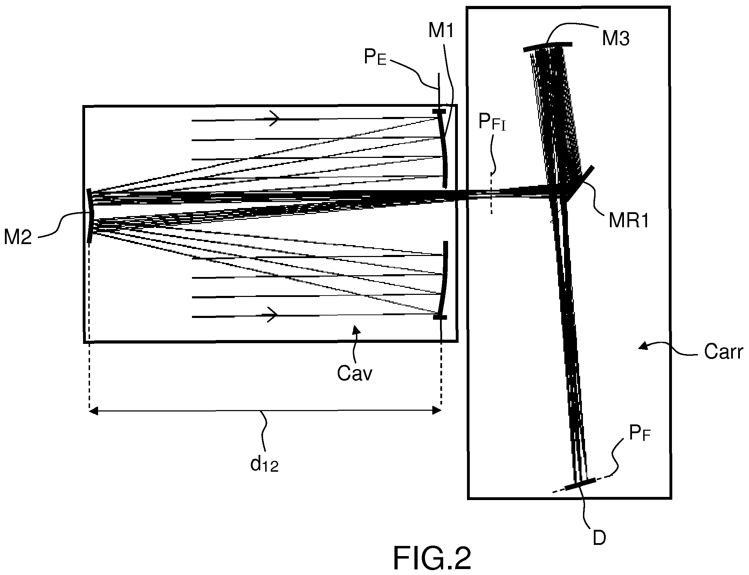

Depuis 20 ans le standard pour les télescopes spatiaux longue focale est le télescope de type « Korsh », tel qu'illustré figure 2, qui permet d'obtenir un champ plus important que celui du Ritchey-Chrétien.

Le télescope de type Korsh, également dénommé TMA (acronyme de l'expression anglo-saxonne « Three Mirors Anastigmat ») est un télescope anastigmat à trois miroirs asphériques (soit de type Concave-Convexe-Concave) qui comprend au moins un premier miroir M1 concave, un second miroir M2 convexe et un troisième miroir M3 concave. Les premier, deuxième et troisième miroirs M1, M2 et M3 sont asphériques, de formes fixes, chaque miroir étant caractérisé par au moins deux paramètres, un rayon de courbure R et une conique c.

Ce système optique présente un axe optique O bien connu de l'homme de l'art, défini par le rayon passant par le centre de la pupille d'entrée $P_E$ et perpendiculaire à cette pupille.

Les trois miroirs M1, M2 et M3 sont agencés de sorte que le premier miroir M1 et le second miroir M2 forment d'un objet à l'infini une image intermédiaire $P_{FI}$ située entre M2 et M3, ce troisième miroir formant de cette image intermédiaire une image finale dans le plan focal du télescope dans lequel est placé un détecteur D.

Au moins un miroir de renvoi MR1 permet de rendre le système plus compact. Ce ou ces miroirs de renvoi peuvent être disposés entre M2 et M3 et/ou entre M3 et le détecteur D (voir plus loin).

Les différents éléments (miroirs M1, M2 et M3, miroir(s) de renvoi et détecteur) du télescope sont agencés selon un ordre, des positions et des caractéristiques optiques qui définissent la combinaison optique du télescope.

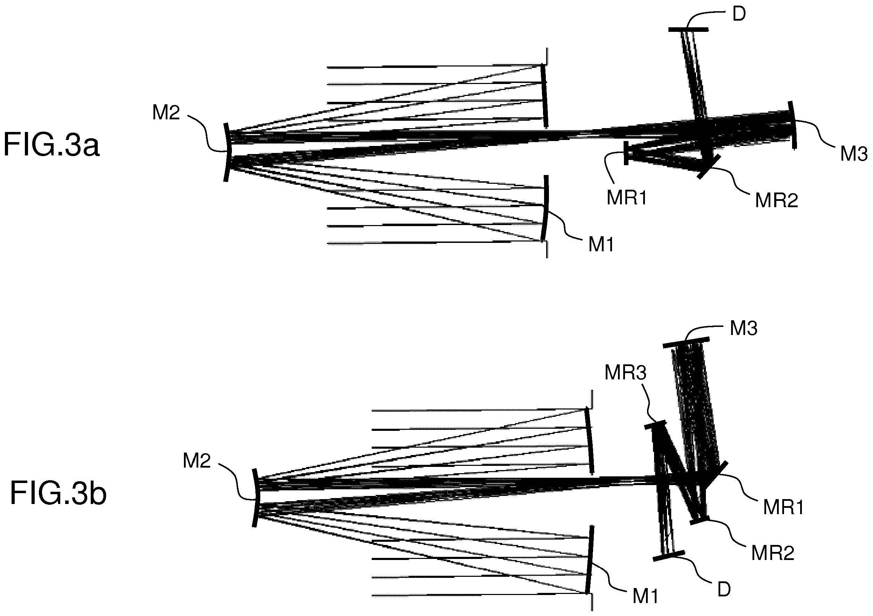

On définit l'avant de M1 comme la zone de l'espace située du côté de M1 par lequel arrive le faisceau lumineux issu de l'objet et incident sur M1. Le miroir M1 et les miroirs disposés en avant de M1, c'est-à-dire typiquement M2 sur la figure 2, constituent la cavité avant Cav, tandis que les miroirs disposés à l'arrière de M1, typiquement M3, le miroir de renvoi MR1 et le détecteur D dans les figures 2, 3a à 3c constituent la cavité arrière Carr.

Par application des équations de Korsh bien connues de l'homme de l'art on calcule aisément les positions et paramètres respectifs des trois miroirs M1, M2 et M3. La solution théorique est de très bonne qualité, ce qui fait tout l'intérêt de ce type de télescope. Ce type de télescope permet typiquement d'obtenir des champs de 2° ou 3°.

Typiquement à partir d'une focale f et des distances d12 entre M1 et M2 et d23 entre M2 et M3 prédéterminées, les équations de Korsh mise en œuvre par des logiciels de calcul optique déterminent la distance entre par exemple M3 et le plan focal $P_F$ et les rayons de courbure et coniques des trois miroirs M1, M2 et M3.

Pour un bon fonctionnement du télescope, il est nécessaire d'aligner l'ensemble des composants optiques de la combinaison avec une grande précision. La structure du télescope a pour fonction principal de garantir un positionnement précis et stable des éléments permettant de capter le signal d'une scène observée. Lors de la conception des instruments de hautes résolutions, on privilégie la performance et la compacité de la combinaison ce qui conduit à des architectures mécaniques particulières, souvent difficiles à concevoir, fabriquer, monter puis régler.

Dans une architecture mécano-thermique classique de télescope avec une combinaison optique de type Korsh, la structure est la suivante :

- La cavité avant Cav soutient le M2 par des « lame-araignée »
- Un banc optique soutient le M1
- La cavité arrière Carr soutient le reste de la combinaison Une telle structuration du télescope tend à augmenter le nombre de pièces mécaniques. En outre un réglage particulièrement délicat est celui du positionnement de M2 par rapport à M1.

En effet, la cavité avant est souvent réalisée à l'aide d'un treillis lié au M2, qui nécessite un positionnement fin par rapport au M1. Le positionnement du M2 est souvent réalisé à l'aide d'un hexapode (dispositif permettant de régler le positionnement de M2 selon les 6 degrés de liberté 3 rotation/3 translations) avant collage.

La position optimale du M2 est réglée au sol à l'aide de moyens opto-mécaniques. Une fois cette position atteinte, le M2 est fixé rigidement à la cavité avant par injection de colle, ce qui permet un montage sans contrainte, de ce miroir dans le télescope.

Cette solution présente plusieurs défauts :

- des coûts de fabrication élevés, liés aux matériaux utilisés et au nombre de pièces à fabriquer et au développement de moyens optomécanique de réglage au sol spécifique à chaque télescope,
- une intégration difficile, puisque le M2 doit être positionné sans contraintes sur les lames araignées.
- de plus, cette mise en position impose un réglage du M2 en amont du télescope (derrière le M2), créant ainsi une obturation du flux lumineux de nature à perturber le réglage au sol de ce miroir.

En outre le banc optique soutenant le M1 nécessite des performances mécano-thermiques difficiles à atteindre avec les moyens de fabrication actuel. En effet, la procédure de fabrication du banc optique (en nid d'abeille) et les moyens de contrôle nécessitent du personnel très qualifié et spécialisé dans ce type de procédé.

Pour la cavité arrière, la variabilité des combinaisons optiques proposées conduit à une impossibilité de standardiser le design mécano-thermique. Il en résulte des coûts non récurrents, et des compétences peu transposables d'une solution à une autre.

Enfin l'ensemble de l'intégration du télescope nécessite un réglage précis des interfaces, avec l'utilisation d'outillages spécifiques. On augmente ainsi le nombre de pièces mécaniques, et les postes liés à l'incertitude de positionnement

Les structures de télescope Korsh selon l'état de la technique conduisent, du fait de la multiplicité des élément et à la nécessité d'un positionnement très précis des diverses composants les uns par rapport aux autres, particulièrement celui de M2 par rapport à M1, à des architectures mécaniques particulières, spécifiques, souvent difficiles à concevoir , à fabriquer, à monter puis à régler.

On peut considérer que la cavité avant d'un Korsh a un volume similaire à celui d'un télescope Ritchey-Chrétien, à focale équivalente. L'augmentation du champ est donc obtenue au prix d'une augmentation de l'encombrement de l'instrument.

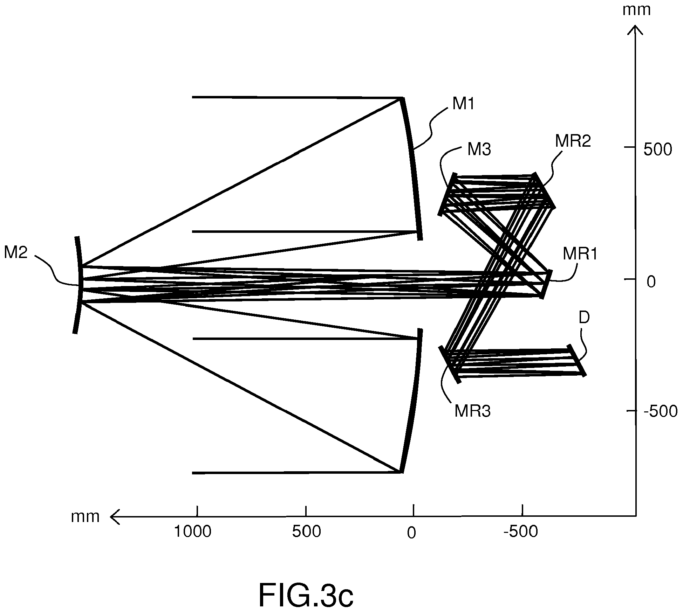

Il existe de nombreuses options de repli, utilisant plusieurs miroirs de repli, pour réduire les dimensions de la cavité arrière Carr, tel qu'illustré figure 3. La figure 3a illustre une option à deux miroirs de renvoi et les figures 3b et 3c à trois miroirs de renvoi.

Pour réduire encore la longueur du télescope, il ne reste que la longueur de la cavité avant Cav comme degré de liberté, c'est-à-dire réduire la distance $d_{12}$ entre M1 et M2. Cependant la réduction de $d_{12}$ dans la combinaison optique du télescope entraîne une augmentation de la sensibilité en déplacement du M2 (dû aux contraintes thermo-élastiques) : diviser la distance $d_{12}$ par deux multiplie la sensibilité au bougé de M2 d'un facteur 4 environ. En outre une distance $d_{12}$ plus courte rend le miroir M1 plus ouvert, c'est-à-dire présentant un rayon de courbure plus petit, ce qui le rend plus difficile à polir. Cet axe de compactage atteint donc une limite.

Le document US 3443853 décrit un télescope à deux miroirs présentant une partie creuse annulaire.

Un but de la présente invention est de palier les inconvénients précités en proposant un télescope de type Korsh amélioré présentant une architecture mécano-thermique simplifiée, permettant d'améliorer les performances mécano-thermiques de la structure, en garantissant une modularité dans la combinaison optique. Le télescope selon l'invention est plus robuste au bougé des miroirs, et donc plus aisé à fabriquer. En outre cette nouvelle architecture est compatible avec des combinaisons optiques plus compactes, sans cavité arrière.

## DESCRIPTION DE L'INVENTION

La présente invention a pour objet un télescope tel que spécifié dans la revendication 1 et un procédé de fabrication tel que spécifié dans la revendication 17. Divers modes de réalisations sont spécifiés dans les revendications dépendantes.

La présente invention a pour objet un télescope anastigmat à trois miroirs asphériques de type Korsh comprenant au moins un premier miroir concave présentant une ouverture centrale, un second miroir convexe disposé à l'avant du premier miroir, un troisième miroir concave, au moins un premier miroir de renvoi et un détecteur.

Les miroirs sont agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé le détecteur.
le télescope comprend en outre :

- une structure porteuse présentant une première face sur laquelle est fixé le premier miroir,
- une structure creuse de forme allongée selon une direction sensiblement perpendiculaire au plan de l'ouverture centrale, limitée par des parois, à l'intérieur de laquelle sont fixés le deuxième miroir dans une partie de la structure creuse située à l'avant du premier miroir, et au moins un autre miroir choisi parmi le troisième miroir et l'au moins un miroir de renvoi.

Les parois présentent au moins une première ouverture de manière à laisser passer un faisceau lumineux issu de l'objet provenant du premier miroir et se dirigeant vers le deuxième miroir.

La structure porteuse comprend en outre des moyens de fixation de la structure creuse à la structure porteuse, et au moins une structure choisie parmi la structure creuse et la structure porteuse présente une partie traversant ladite ouverture centrale.

La structure porteuse présente une partie avant creuse traversant l'ouverture centrale et entourant une partie de la structure creuse, les moyens de fixation étant disposés au niveau de ladite partie avant de la structure porteuse.

Selon un mode de réalisation la structure porteuse est monobloc. Préférentiellement le télescope selon l'invention comprend en outre un bâti arrière, et la structure porteuse est fixée audit bâti arrière.

Préférentiellement lequel les parois de la structure creuse comprennent au moins une deuxième ouverture de manière à laisser passer un faisceau lumineux issu d'un miroir fixé à l'intérieur de la structure creuse et se dirigeant vers le miroir suivant de la combinaison optique disposé à l'extérieur de la structure creuse.

Selon un mode de réalisation les moyens de fixation sont constitués de colle injectée via des trous d'injection réalisés dans la partie avant de la structure porteuse.

Selon un mode de réalisation la structure creuse allongée traverse également l'ouverture centrale, présentant ainsi une partie située à l'arrière du premier miroir.

Selon un mode de réalisation le télescope comprend en outre une structure de support fixée à la partie de la structure creuse située à l'arrière du premier miroir, et sur laquelle sont fixés un ou plusieurs éléments du télescope le cas échéant.

Selon une variante l'au moins un autre miroir fixé à l'intérieur de la structure creuse est le premier miroir de renvoi, disposé dans la partie de la structure creuse située à l'arrière du premier miroir.

Selon une autre variante l'au moins un autre miroir fixé à l'intérieur de la structure creuse est le troisième miroir.

Selon un mode de réalisation de cette autre variante le troisième miroir est disposé sensiblement dans le plan de l'ouverture centrale du premier miroir. On définit une première distance comme la distance entre le premier et le deuxième miroir et une deuxième distance comme la distance entre le deuxième miroir et le troisième miroir. Préférentiellement la deuxième distance est comprise entre 90% et 150 % de la première distance.

Selon un mode de réalisation le premier miroir de renvoi est également fixé à l'intérieur de la structure creuse dans la partie de la structure creuse située à l'avant du premier miroir.

Selon une troisième variante l'au moins autre miroir fixé à l'intérieur de la structure creuse est le premier miroir de renvoi et dans lequel le troisième miroir est disposé sensiblement dans le plan de l'ouverture centrale du premier miroir et est fixé à la structure porteuse. Selon une sous variante la structure porteuse présente une partie arrière creuse à l'extérieur de laquelle est fixé le détecteur.

Préférentiellement un miroir de renvoi est disposé sensiblement dans une pupille de sortie du télescope.

Selon un mode de réalisation ce miroir de renvoi est actif.

Selon un autre mode de réalisation un miroir de renvoi est disposé sensiblement dans une pupille de sortie du télescope, est asphérique et adapté à une première focale du télescope, et est escamotable de manière à être remplacé par au moins un autre miroir de renvoi adapté pour respectivement une autre focale, différente de la première focale.

Selon un autre aspect l'invention concerne un procédé de fabrication d'un télescope de type Korsh anastigmat à trois miroirs asphériques comprenant au moins un premier miroir concave présentant une ouverture centrale, un second miroir convexe, un troisième miroir concave, au moins un premier miroir de renvoi et un détecteur, les miroirs étant agencés de sorte que le premier miroir et le second miroir forment d'un objet à l'infini une image intermédiaire située entre le second miroir et le troisième miroir, le troisième miroir formant de cette image intermédiaire une image finale dans le plan focal du télescope dans lequel est placé le détecteur.

Le procédé comprend les étapes consistant à :

- fournir une structure porteuse présentant une première face sur laquelle est fixé le premier miroir et présentant une partie avant creuse traversant l'ouverture centrale du premier miroir,
- fournir une structure creuse de forme allongée et limitée par des parois, à l'intérieur de laquelle sont fixés le deuxième miroir et au moins un autre miroir choisi parmi le troisième miroir et l'au moins un miroir de renvoi, lesdites parois de la structure creuse présentant au moins une première ouverture,
- insérer la structure creuse dans la partie avant creuse de la structure porteuse,
- positionner ladite structure creuse par rapport à la structure porteuse selon une direction sensiblement perpendiculaire au plan de l'ouverture centrale avec un dispositif de réglage en position, de sorte que le deuxième miroir soit positionné à l'avant du premier miroir à une position déterminée par rapport au premier miroir, la première ouverture étant configurée de manière à laisser passer un faisceau lumineux issu de l'objet, provenant du premier miroir et se dirigeant vers le deuxième miroir,
- fixer la structure creuse à la structure porteuse par des moyens de fixation mis en œuvre à partir de la partie avant de la structure porteuse,
- retirer le dispositif de réglage en position.

Selon un mode de réalisation l'étape de positionnement consiste à glisser puis fixer provisoirement à l'intérieur de la structure creuse un outillage relais relié à un dispositif de réglage extérieur à la structure permettant un réglage selon 6 degrés de liberté, puis à régler ladite position.

Selon un mode de réalisation l'étape de fixation consiste à injecter une colle via des trous d'injection disposés dans la partie avant de la structure porteuse.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée décrit un télescope de type Ritchey-Chrétien.

La figure 2 déjà citée décrit la combinaison optique d'un télescope s longue de type « Korsh » connu de l'art antérieur.

La figure 3 déjà citée illustre différentes options pour réduire les dimensions de la cavité arrière Carr.

La figure 3a illustre une option avec 2 miroirs de renvoi.

La figure 3b illustre une option avec 3 miroirs de renvoi.

La figure 3c illustre une autre option avec 3 miroirs de renvoi.

La figure 4 illustre un mode de réalisation du télescope selon l'invention correspondant à la configuration optique de la figure 1.

La figure 5 est un exemple de vue en perspective des deux éléments principaux, la structure porteuse 50 et la structure creuse, et du premier miroir M1 fixé à la structure porteuse 50.

La figure 6 illustre un mode de réalisation du télescope selon l'invention correspondant à la configuration optique de la figure 3c avec 3 miroirs de renvoi MR1, MR2 et MR3.

La figure 7 illustre un mode de réalisation du télescope selon l'invention reprenant la configuration de la figure 6 dans lequel les moyens de fixation sont constitués de colle.

La figure 8 illustre une variante du télescope selon l'invention dans lequel l'au moins un miroir également fixé à la structure creuse est le troisième miroir M3.

La figure 9 illustre différentes configurations optiques avec le troisième miroir M3 disposé dans le plan de l'ouverture Ac.

Les figures 9a et 9b illustrent des configurations avec un seul miroir de renvoi MR1 et la figure 9c illustre une configuration avec deux miroirs de renvoi MR1 et MR2.

La figure 10 illustre le télescope 10 selon l'invention correspondant à la configuration optique de la figure 9b.

La figure 11 illustre le télescope 10 selon l'invention correspondant à la configuration optique de la figure 9c comprenant un deuxième miroir de renvoi MR2.

La figure 12 illustre une autre variante dans laquelle l'autre miroir fixé à l'intérieur de la structure creuse est MR1 mais ici MR1 n'est pas le miroir suivant M2 dans la combinaison optique. C'est le miroir M3 qui suit M2, M3 étant disposé sensiblement dans le plan $P_{Ac}$ de l'ouverture centrale Ac du M1, mais fixé à la structure porteuse et non pas à la structure creuse.

La figure 13 illustre un procédé selon un autre aspect de l'invention.

La figure 14 illustre une variante du procédé dans laquelle l'étape de positionnement consiste à glisser puis fixer provisoirement à l'intérieur de la structure creuse un outillage relais 95 relié à un dispositif de réglage 90 extérieur à la structure.

## DESCRIPTION DETAILLEE DE L'INVENTION

Le télescope selon l'invention est un télescope 10 anastigmat à trois miroirs asphériques de type Korsh comprenant au moins un premier miroir M1 concave présentant une ouverture centrale Ac, un second miroir M2 convexe disposé à l'avant du premier miroir, un troisième miroir M3 concave, au moins un premier miroir de renvoi MR1 et un détecteur D. Le nombre et la position des miroirs de renvoi est déterminé par la combinaison optique du télescope. Les miroirs M1, M2 et M3 sont agencés de sorte que M1 et le M2 forment d'un objet à l'infini une image intermédiaire située entre M2 et M3, ce dernier formant de cette image intermédiaire une image finale dans le plan focal du télescope dans lequel est placé le détecteur D.

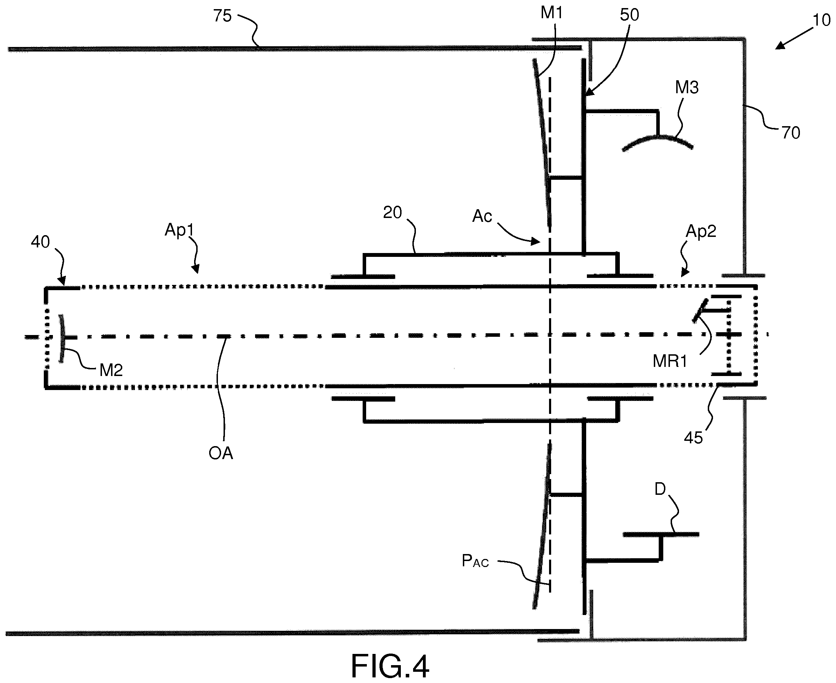

Diverses variantes et modes de réalisation du télescope selon l'invention sont illustrées figures 4, 6, 8, 10, 11, 12 et 12bis.

Le télescope 10 selon l'invention comprend en outre une structure porteuse 50 présentant une première face sur laquelle est fixé le premier miroir M1. La structure porteuse 50 est donc disposée à l'arrière du M1.

Le télescope selon l'invention comprend également une structure creuse 40 de forme allongée selon une direction sensiblement perpendiculaire au plan de l'ouverture centrale limitée par des parois. A l'intérieur de la structure creuse 40 allongée est fixé le deuxième miroir M2 dans une partie de la structure creuse située à l'avant de M1. A l'intérieur de la structure creuse 40 allongée est également fixé au moins un autre miroir choisi parmi le troisième miroir M3 et l'au moins un miroir de renvoi MR1.

La structure creuse 40 présente préférentiellement une symétrie de révolution, et une forme globalement tubulaire, mais présentant différentes parties de diamètres différents. Elle peut également être constituée de plusieurs parties modulaires.

Les parois présentent au moins une première ouverture Ap1 de manière à laisser passer un faisceau lumineux issu de l'objet provenant de M1 et se dirigeant vers M2.

En outre la structure porteuse 50 comprend en outre des moyens de fixation de la structure creuse 40 à cette structure porteuse 50. Un avantage de fixer la structure creuse 40 à la structure porteuse, plutôt que directement au M1, est que l'on dissocie cinématiquement la structure creuse qui supporte le M2 et le miroir M1 (pas de liaison mécanique entre les deux miroirs avant collage), ce qui permet le réglage de M2 par rapport à M1.

La structure porteuse est une pièce intermédiaire entre la structure creuse et le miroir primaire qui permet de limiter les efforts transmis. Dans une application embarquée sur un satellite par exemple, cette configuration offre plusieurs avantages :

- Au sol, la structure porteuse permet un chemin d'effort privilégié de la structure creuse vers le bâti. La déformation transmise au miroir primaire est donc fortement réduite, et ne nécessite pas de moyens de compensation de gravité.
- Au lancement, la structure porteuse permet de filtrer les vibrations de la structure creuse, supportant le miroir secondaire en porte à faux. En effet, l'architecture permet de décorréler les modes de la structure et des miroirs, ce qui limite les efforts transmis au miroir primaire M1 ainsi que les risques de rupture
- En vol, la structure porteuse permet de limiter la transmission des déformées liée au chargement en vol, par l'intégration de dispositifs de fixation de miroir, notamment pour le miroir primaire.

Enfin au moins une structure choisie parmi la structure creuse 40 et la structure porteuse 50 présente une partie traversant l'ouverture centrale Ac. On définit l'axe optique OA du télescope comme la droite qui relie les centres de courbure de tous les miroirs. Cette axe coïncide avec l'axe qui passe par le centre de la pupille d'entrée et est perpendiculaire au plan de cette pupille. L'axe optique entre M1 et M2 passe également par le centre de symétrie (sommet) du miroir M1 et est illustré sur la figure 4. Le plan de l'ouverture centrale $P_{AC}$ est perpendiculaire à l'axe optique.

L'axe longitudinal de la structure porteuse 40 est sensiblement parallèle à l'axe optique entre M1 et M2 à quelques degrés près.

Comme décrit plus loin il existe différentes variantes du télescope selon que l'une uniquement, l'autre uniquement ou les deux structures (porteuse 50 et creuse allongée 40) présentent une partie traversant l'ouverture centrale Ac.

La structure du télescope 10 selon l'invention est modulaire et présente une architecture mécano-thermique simplifiée, fondée sur deux pièces principales, la structure allongée 40 à la structure porteuse 50.

La logique de réglage et d'intégration est simplifiée car, une fois la structure allongée 40 correctement positionnée par une méthode décrite plus loin, il suffit de la fixer à la structure porteuse 50 par des moyens de fixation.

La structure 40 garantit un positionnement précis du miroir M2 (et de MR1 ou M3) par rapport à M1.

Les autres éléments sont alors positionnés de manière plus aisée sur cet ensemble, via des dispositifs de fixation de miroir (DFM). Une plus grande précision du positionnement des optiques est obtenu, la chaîne de cotes entre les optiques est réduite, ce qui permet de limiter les coûts de fabrication des pièces et les incertitudes de positionnement. L'intégration et les test sont également simplifiés.

Comme décrit plus loin, dans plusieurs variantes plusieurs miroirs et le détecteur D peuvent être écartés radialement de la structure, ce qui rend l'architecture compatible de plusieurs combinaisons optiques de Korsh.

La première ouverture Ap1 garantit le passage des rayons provenant de M1. La perte de flux potentielle peut être compensée par un agrandissement du diamètre de M1, qui n'est plus limité en taille par le treillis avant.

Un autre avantage est que la structure porteuse 50 réalise une isolation thermique entre cavité avant et cavité arrière.

Préférentiellement la structure porteuse 50 est monobloc, c'est-à-dire réalisée en une fois à partir d'un matériau unique, ce qui rend sa fabrication compatible de la synthèse additive et améliore son comportement thermo-élastique. Le matériau est par exemple de l'INVAR ou $Si_3N_4$. Préférentiellement le télescope selon l'invention comprend en outre un bâti arrière 70, également dénommé carter formant un repère fixe, sur lequel la structure porteuse 50 est fixée.

Optionnellement le télescope 10 présente un baffle 75 qui protège la cavité avant des rayons parasites.

Selon une variante préférée la structure porteuse 50 présente une partie avant 20 creuse traversant l'ouverture centrale Ac et entourant une partie de la structure creuse 40, les moyens de fixation étant disposés au niveau de ladite partie avant 20 de la structure porteuse 50.

Ceci présente l'avantage de rendre accessible les moyens de fixation par l'avant du M1. De plus, une structure porteuse traversant l'ouverture centrale assure une meilleure rigidité à la structure creuse, assurant ainsi la tenue et la stabilité des pièces au lancement du satellite portant le télescope. Lors du réglage au sol, la structure porteuse permet aussi de limiter la course de la structure creuse lors du réglage de la position du M2.

La figure 4 illustre un mode de réalisation du télescope selon l'invention correspondant à la configuration optique de la figure 1. Le troisième miroir M3 et le détecteur D sont fixé sur une deuxième face de la structure porteuse 50, respectivement de part et d'autre de la structure creuse.

Selon un mode de réalisation illustré figures 4 à 8, la structure creuse 40 allongée traverse également l'ouverture centrale, présentant ainsi une partie 45 située à l'arrière du premier miroir M1 et de la structure porteuse 50. C'est préférentiellement dans cette partie arrière qu'est fixé l'autre miroir, MR1 ou M3.

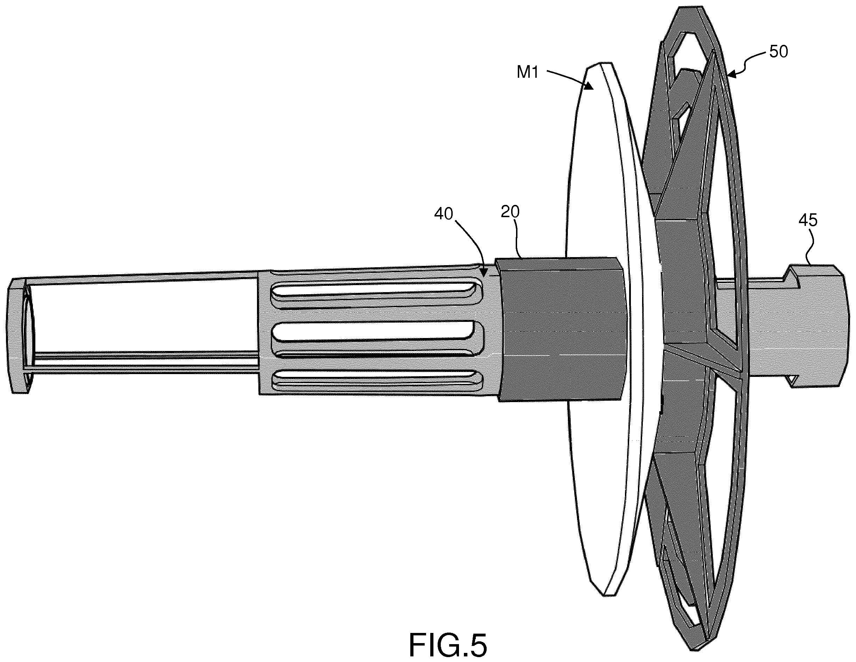

La figure 5 est un exemple de vue en perspective des deux éléments principaux 40 et 50 et du premier miroir M1.

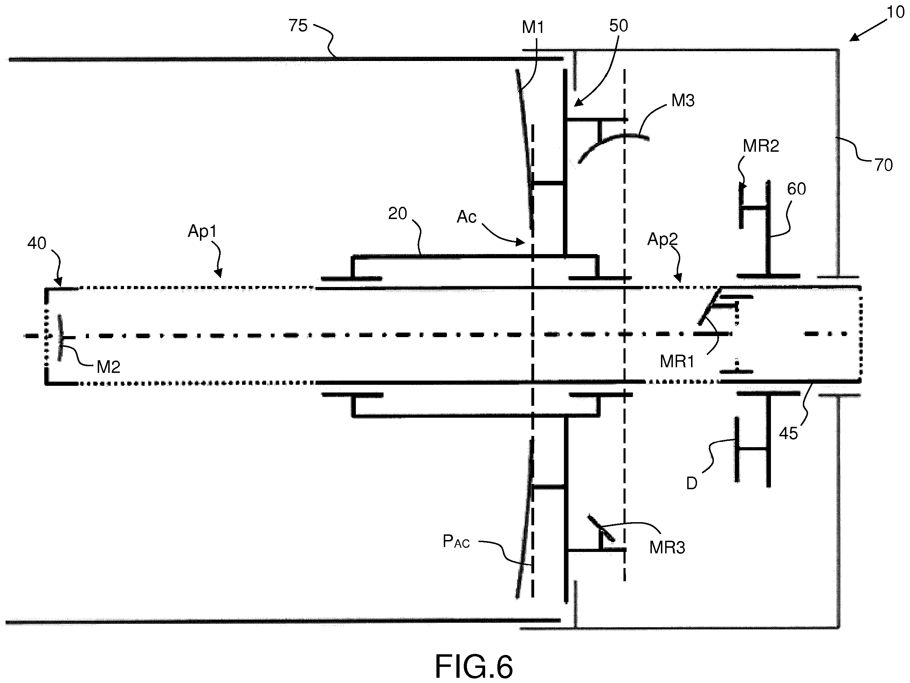

La figure 6 illustre un mode de réalisation du télescope 10 selon l'invention correspondant à la configuration optique de la figure 3c avec 3 miroirs de renvoi MR1, MR2 et MR3. Le troisième miroir M3 et le troisième miroir de renvoi MR3 sont fixés sur une deuxième face de la structure porteuse 50, de chaque côté de la partie arrière 45 de la structure creuse.

Il est possible d'avoir tous les éléments, y compris le détecteur D, à l'intérieur de la structure creuse 40. Cependant préférentiellement une partie des éléments sont disposés à l'extérieur de la structure 40. Dans ce cas les parois de la structure creuse comprennent au moins une deuxième ouverture Ap2 de manière à laisser passer un faisceau lumineux issu d'un miroir fixé à l'intérieur de la structure creuse 40 et se dirigeant vers le miroir suivant de la combinaison optique disposé à l'extérieur de la structure creuse 40.

Par exemple sur la figure 4 Ap2 est configurée pour laisser passer le faisceau allant de MR1 à M3 et le faisceau lumineux allant de M3 à D, sur la figure 6 Ap2 est configurée pour laisser passer un faisceau lumineux issu de MR1 et se dirigeant vers M3 et un faisceau lumineux issu du deuxième miroir de renvoi MR2 et se dirigeant vers le troisième miroir de renvoi MR3 disposé du côté opposé de la partie arrière 45 de la structure creuse.

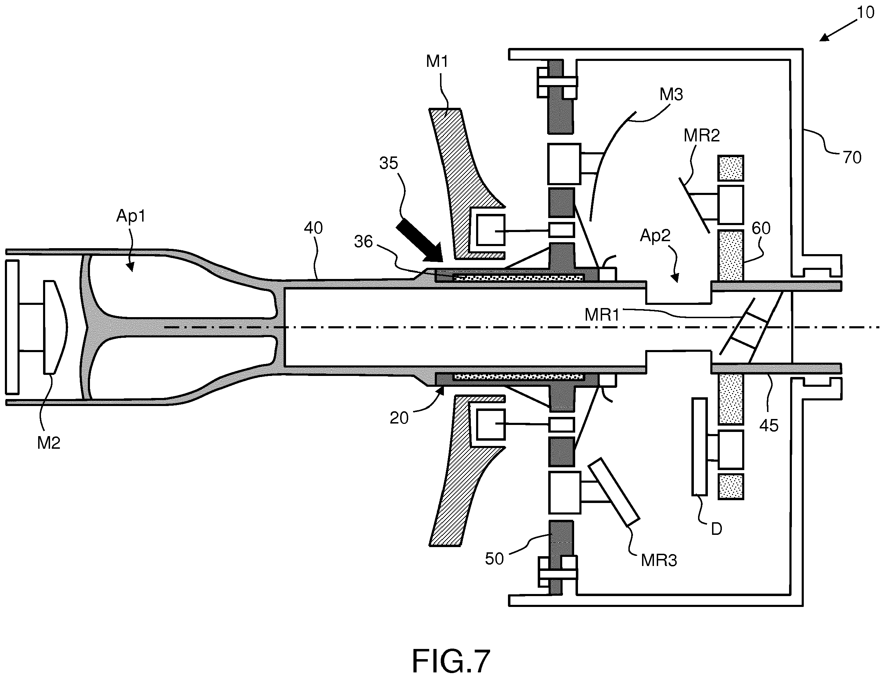

Les moyens de fixation peuvent prendre la forme de colle, de rivets, de vis ou de soudure. Selon un mode de réalisation préféré illustré figure 7, reprenant la configuration de la figure 6, les moyens de fixation sont constitués de colle 36, injectée par l'avant du M1 (voir flèche 35) via des trous d'injection réalisés dans la partie avant 20 de la structure porteuse. On peut ainsi fixer la structure 40 à la structure porteuse 50 par l'avant du M1... En comparaison avec une architecture classique de cavité avant, la structure proposée réduit le nombre de pièces entre les optiques. On obtient alors une architecture présentant une simplicité de montage et de réglage des optiques, une limitation des couts de fabrication et une réduction de la masse de la structure

Lorsque la structure creuse 40 présente une partie arrière 45, selon un mode de réalisation le télescope 10 comprend en outre une structure de support 60 fixée à la partie 45 sur laquelle sont fixés un ou plusieurs éléments du télescope le cas échéant. Par exemple sur les figures 6 et 7, MR2 et D sont fixés au support 60. On multiplie ainsi les combinaisons optiques accessibles.

Selon une variante l'au moins un autre miroir également fixé à 40 est le premier miroir de renvoi MR1, tel qu'illustré figures 4 et 6.

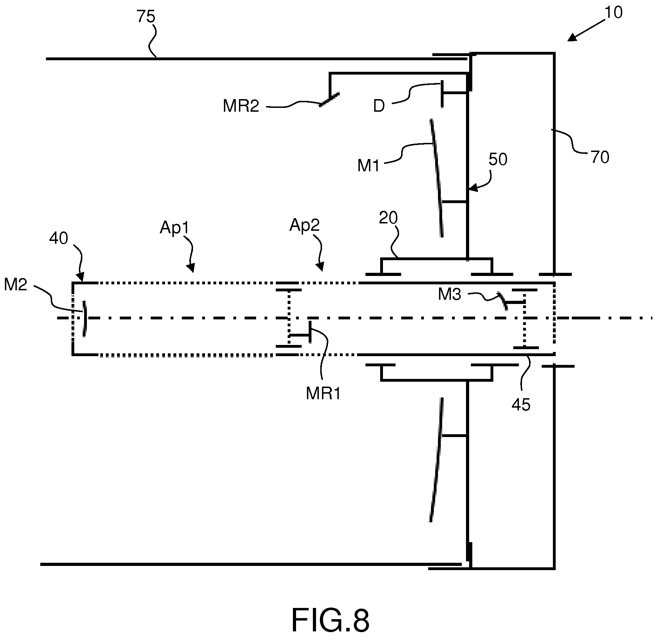

Selon une autre variante l'au moins un miroir également fixé à 40 est le troisième miroir M3, tel qu'illustré figure 8. Le deuxième miroir de renvoi MR2 et le détecteur D sont ici fixés à la structure porteuse sur la même face que celle qui supporte M1.

Selon un mode de réalisation préféré de cette variante le troisième miroir M3 est disposé sensiblement dans le plan $P_{Ac}$ de l'ouverture centrale Ac du premier miroir M1. Ce plan Ac correspond à la position du miroir M1 dans la combinaison optique. Le miroir M3 est donc situé dans l'ouverture Ac.

Préférentiellement le premier miroir de renvoi MR1 qui récupère le faisceau lumineux issu du M3 est également fixé dans la structure creuse 40, ce qui améliore nettement la stabilité du télescope. MR1 est préférentiellement placé dans la pupille de sortie du télescope, ce qui permet d'utiliser ce miroir de renvoi comme un correcteur soit des défauts du M1, soit pour ajouter une fonction type bifocal.

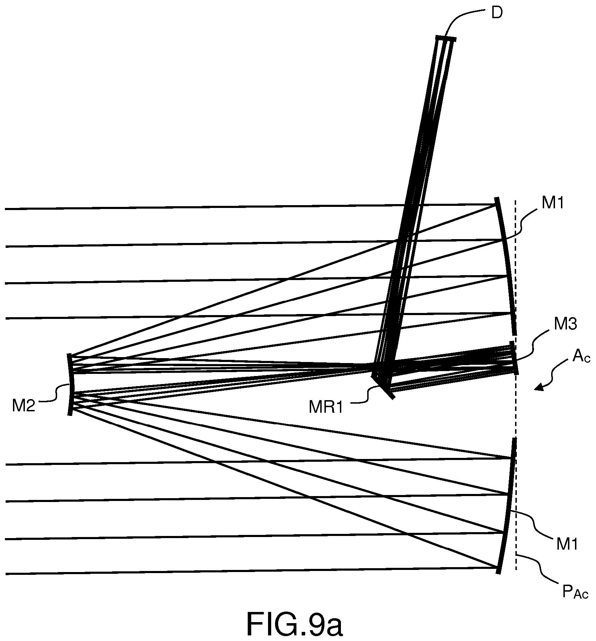

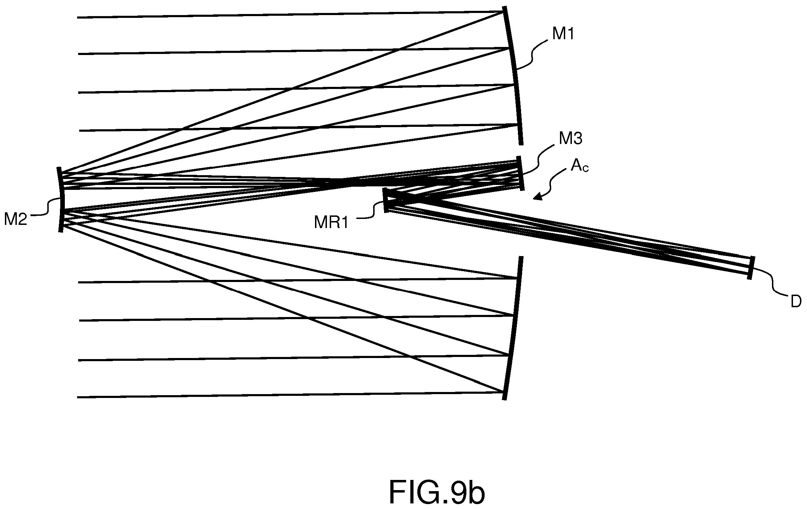

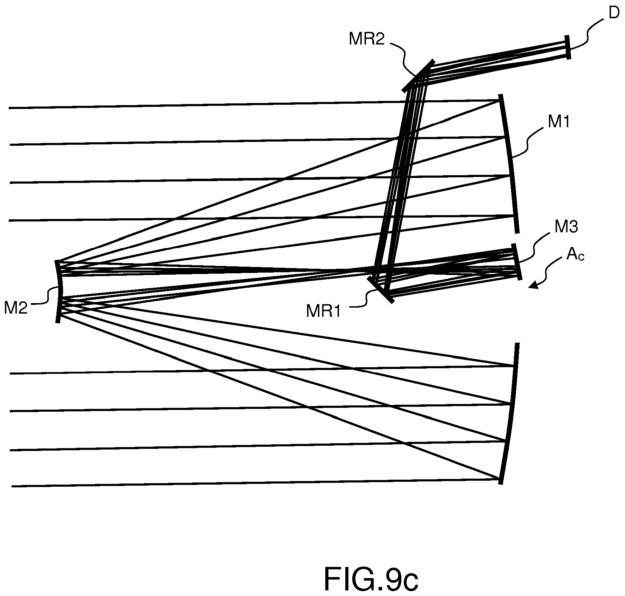

Différentes configurations optiques sont possibles, 3 exemples sont illustrés figures 9a, 9b et 9c. Pour les figures 9a et 9b, un seul miroir de renvoi MR1 et pour la figure 9c deux miroirs de renvoi MR et MR2.

Ce mode de réalisation présente l'avantage de supprimer la cavité arrière, ce qui génère un gain de volume important, du fait de la diminution entre ¼ et 1/3 de la longueur de l'instrument et un gain de masse important, entre ¼ et 1/3 du poids de l'instrument.

Le télescope ainsi défini conserve les avantages d'un Korsh : compacité, champ de vu atteignable >1°, plan focal intermédiaire et pupille de sortie accessible.

La sensibilité en positionnement du M3 reste faible, et la sensibilité en positionnement du M2 est améliorée si on alloue une partie du gain en longueur obtenu par la suppression de la cavité arrière à l'augmentation de la distance $d_{12}$ entre M1 et M2.

On définit l'ombre du deuxième miroir M2 comme la zone de l'espace située entre M1 et M2 ne comprenant pas de rayons lumineux issus de l'objet, du fait de leur masquage par M2. M3 est préférentiellement situé dans l'ombre du M2. Le premier miroir de renvoi MR1 est également préférentiellement disposé dans l'ombre du M2.

On définit $d_{12}$ distance entre M1 et M2 et $d_{23}$ distance entre M2 et M3. La distance d23 est donc sensiblement égale à d12 puisque M3 est positionné sensiblement dans le plan de l'ouverture centrale.

Préférentiellement on a :

$$d_{23} > 0.9 \times d_{12}$$

Les combinaisons optiques avec $d_{23}$ plus faible sont déséquilibrées et de mauvaise qualité.

Afin de conserver l'avantage d'une suppression de la cavité arrière on a préférentiellement :

$$d_{23} < d_{12} \times 1.5$$

Selon une variante le miroir M3 peut-être poli directement sur le M1.

Selon un mode de réalisation préféré le premier miroir de renvoi MR1 est également fixé dans la structure porteuse 40 dans une partie située à l'avant du M1.

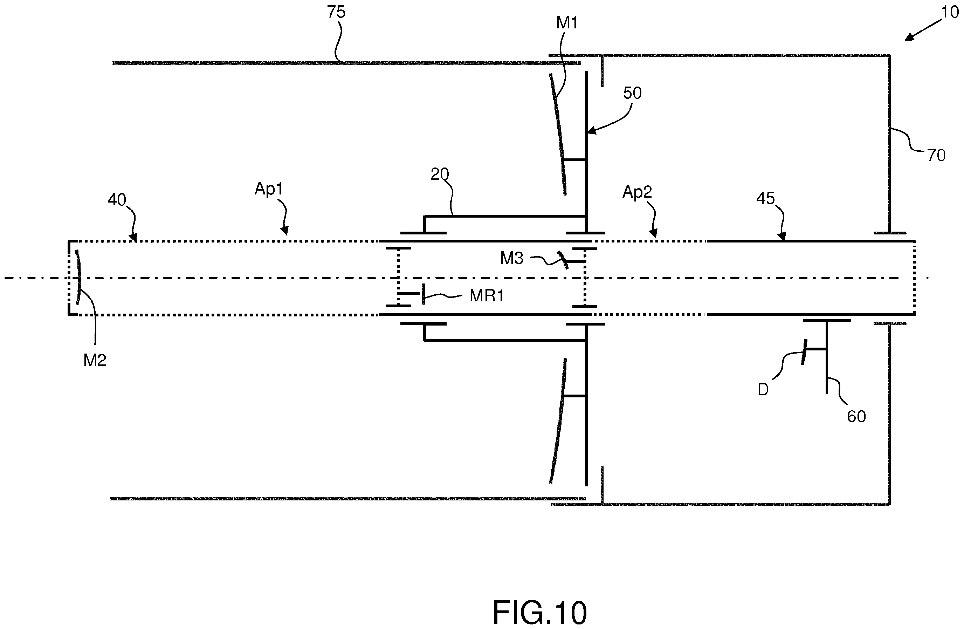

La figure 10 illustre le télescope 10 selon l'invention correspondant à la configuration optique de la figure 9b. Le détecteur D est fixé à la structure de support 60, la deuxième ouverture Ap2 est configurée pour laisser passer un faisceau lumineux issu du premier miroir de renvoi MR1et se dirigeant vers le détecteur D.

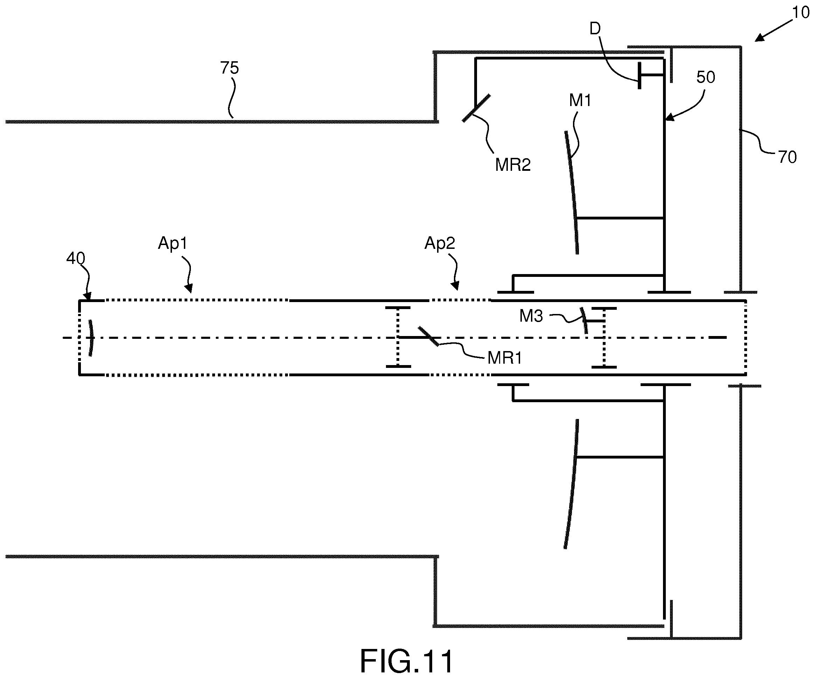

La figure 11 illustre le télescope 10 selon l'invention correspondant à la configuration optique de la figure 9c comprenant un deuxième miroir de renvoi MR2. Le deuxième miroir de renvoi MR2 et le détecteur D sont fixés à la structure porteuse 50 sur la même face que celle qui supporte le M1. La deuxième ouverture Ap2 est configurée pour laisser passer un faisceau lumineux issu du premier miroir de renvoi MR1 et se dirigeant vers le deuxième miroir de renvoi MR2. Le télescope est ici ultra compact, sans cavité arrière.

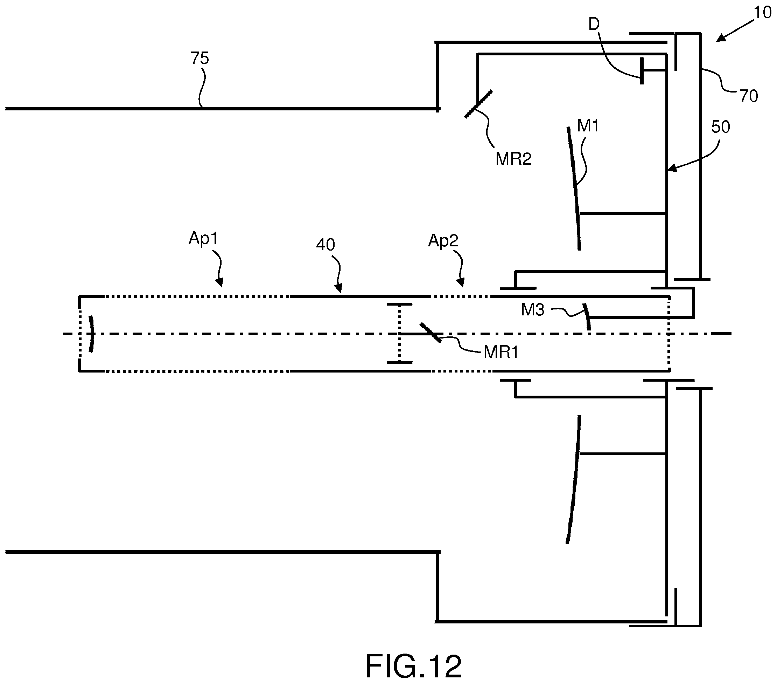

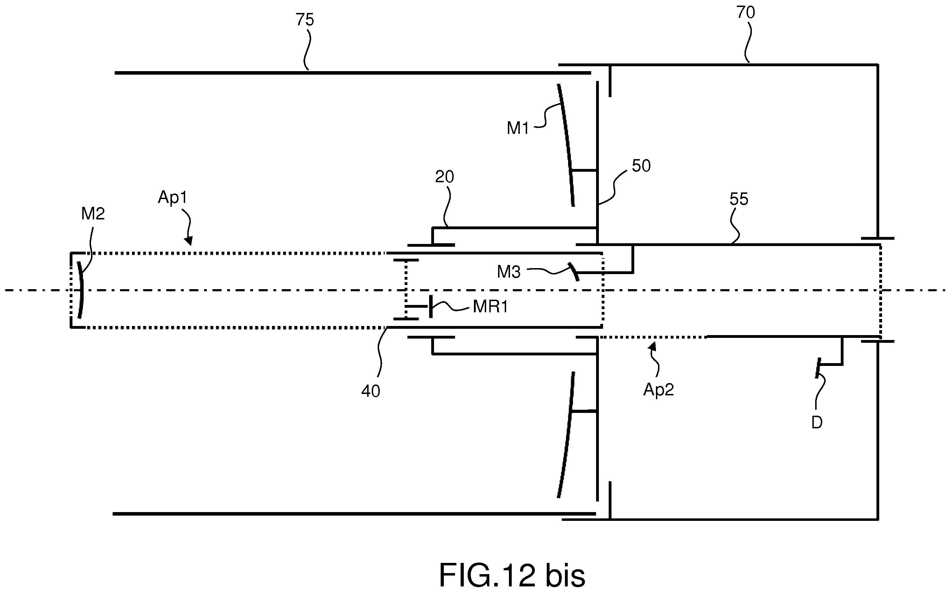

Selon une autre variante illustré figures 12 et 12bis l'autre miroir fixé à l'intérieur de la structure creuse 40 est le premier miroir de renvoi MR1 mais ici MR1 n'est pas le miroir suivant M2 dans la combinaison optique. C'est le miroir M3 qui suit M2, M3 étant disposé sensiblement dans le plan $P_{Ac}$ de l'ouverture centrale Ac du M1, mais ici fixé à la structure porteuse 50 et non pas à la structure creuse 40. Préférentiellement la structure creuse n'a pas de partie arrière, qui n'est plus nécessaire. La fixation du M3 sur la même pièce que le M1 permet de réduire le nombre de postes d'incertitudes entre le positionnement des 2 pièces.

Dans la sous variante de la figure 12, le deuxième miroir de renvoi MR2 et le détecteur D sont également fixés à la structure porteuse 50 sur la même face que celle qui supporte le M1. Le télescope est ici également ultra compact, sans cavité arrière.

Dans la sous variante de la figure 12bis, la structure porteuse présente une partie arrière 55 creuse sur laquelle est fixé, à l'extérieur, le détecteur D. Le détecteur peut être fixé directement sur la partie arrière 55 ou par l'intermédiaire d'une structure support de même type que la structure 60. L'intérêt ici est de mettre un maximum d'éléments du télescope sur la structure porteuse, de manière à réduire la chaine de cote optique. Un autre avantage de l'existence de la partie arrière est qu'elle permet de cloisonner la cavité arrière, en créant une isolation thermique des miroirs présents dans la cavité arrière.

Selon un mode de réalisation, un miroir de renvoi du télescope (MR1, MR2 ou MR3) est disposé sensiblement dans une pupille de sortie du télescope, et est actif. Ce miroir de renvoi n'est alors plus plan comme le sont généralement les miroirs de renvoi mais doté d'une fonctionnalité permettant de modifier sa courbure et sa conicité afin de corriger certaines aberrations/dérives du télescope.

Selon un autre mode de réalisation un miroir de renvoi du télescope MR' est disposé sensiblement dans une pupille de sortie du télescope, est asphérique et adapté à une première focale f' du télescope, et est escamotable de manière à être remplacé par au moins un autre miroir de renvoi MR" adapté pour une autre focale f", différente de la première focale, tel que décrit dans le document FR 1700254.

Selon un mode de réalisation le télescope selon l'invention comprend en outre un dispositif de re-focalisation thermique configuré pour déplacer le deuxième miroir M2 par rapport au premier miroir M1.

Selon un autre aspect l'invention concerne un procédé 100 de fabrication d'un télescope de type Korsh anastigmat à trois miroirs asphériques M1, M2 et M3, comprenant également au moins un premier miroir de renvoi MR1 et un détecteur D. M1 présente une ouverture centrale Ac.

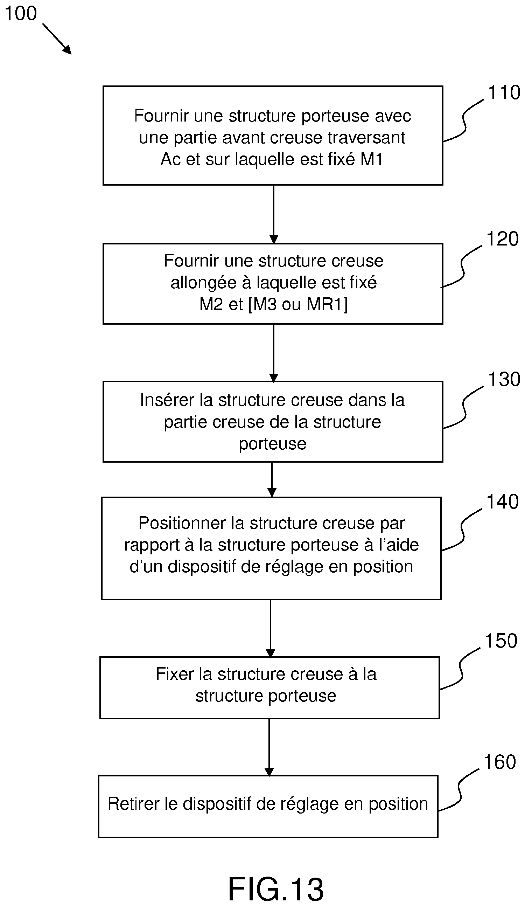

Le procédé illustré figure 13 comprend une première étape 110 consistant à fournir une structure porteuse 50 présentant une première face sur laquelle est fixé le premier miroir M1 et présentant une partie avant creuse 20 traversant l'ouverture centrale du premier miroir. Cet ensemble correspond au bloc 50 et au M1 illustré dur la figure 5.

Une deuxième étape 120 consiste à fournir une structure creuse de forme allongée et limitée par des parois, à l'intérieur de laquelle sont fixés le deuxième miroir M2 et au moins un autre miroir choisi parmi M3 et l'au moins un miroir de renvoi MR1. Les parois de la structure creuse présentant au moins une première ouverture Ap1. Cet élément correspond à l'élément 40 de la figure 5.

Dans une troisième étape 130 on insère la structure creuse 40 dans la partie avant creuse 20 de la structure porteuse 50 puis dans une quatrième étape 140 on positionne la structure creuse 40 par rapport à la structure porteuse 50 selon une direction sensiblement perpendiculaire au plan de l'ouverture centrale avec un dispositif de réglage en position de sorte que le deuxième miroir M2 soit positionné à l'avant du premier miroir M1 à une position déterminée par rapport au premier miroir M1, la première ouverture étant configurée de manière à laisser passer un faisceau lumineux issu de l'objet, provenant du premier miroir et se dirigeant vers le deuxième miroir.

La précision nécessaire sur la direction sensiblement perpendiculaire au plan de l'ouverture centrale varie en fonction de la combinaison optique. Elle peut être de l'ordre du degré, de l'ordre du milli radian...

L'avantage d'avoir une structure creuse allongée à laquelle est fixé le M2 est que le réglage délicat du M2 par rapport au M1 se fait via le réglage de la structure 40 par rapport à la structure 50. Le réglage fin de la position du M2 par l'intermédiaire de la structure creuse et non pas par derrière permet de ne pas générer d'obturation sur le flux lumineux arrivant sur le M1 lors du réglage du système optique au sol. Le dispositif de réglage du M2, disposé du côté arrière et qui va être retiré après le réglage n'est donc plus limité en taille ou en masse, ce qui permet de sélectionner des composants standards, réduisant ainsi les couts liés à l'intégration du télescope.

Puis une fois la structure 40 correctement positionnée de sorte que M2 soit à la bonne position par rapport à M1, dans une cinquième étape 150 on fixe la structure creuse à la structure porteuse par des moyens de fixation mis en œuvre à partir de la partie avant de la structure porteuse.

L'existence de la partie avant 20 de la structure porteuse 50 située à l'avant du M1 rend donc les moyens de fixation accessibles depuis l'avant du télescope, ce qui simplifie beaucoup le réglage et l'intégration. Préférentiellement l'étape de fixation consiste à injecter une colle via des trous d'injection disposés dans la partie avant de la structure porteuse. Enfin dans une sixième étape 160 on retire le dispositif de réglage en position. On a ainsi dissocié positionnement et fixation.

Les autres éléments du télescope sont fixés et réglés via des DRM (dispositif de réglage de miroirs).

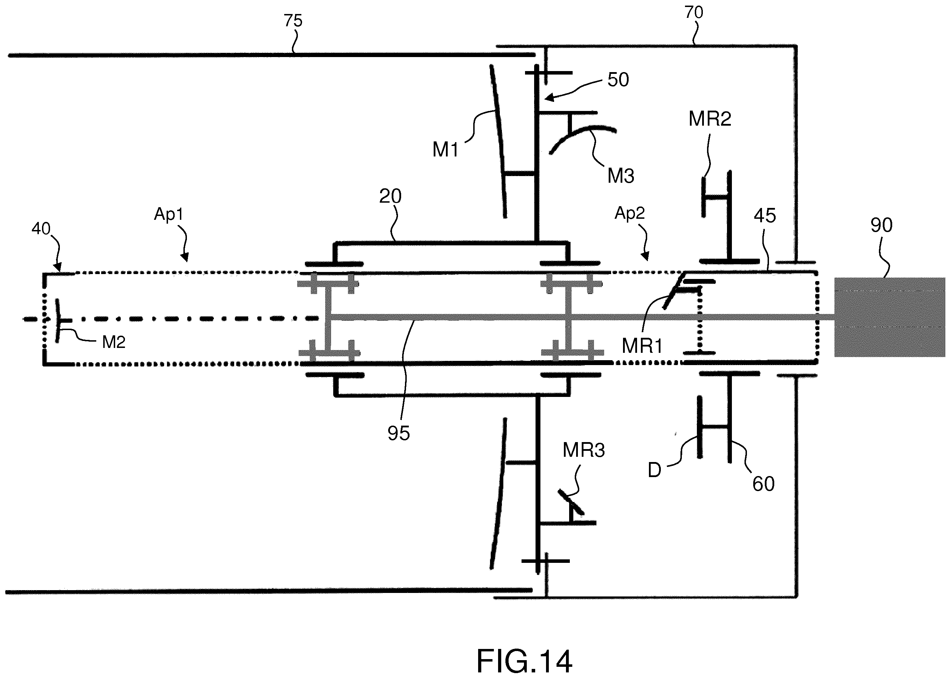

Selon une variante préférée illustrée figure 14 l'étape de positionnement consiste à glisser puis fixer provisoirement à l'intérieur de la structure creuse un outillage relais 95 relié à un dispositif de réglage 90 extérieur à la structure. Ce dispositif 96, tel un hexapode, permet un réglage selon 6 degrés de liberté afin de positionner précisément M2 par rapport à M1. Le dispositif de réglage en position est donc constitué de l'outillage relais 95 et du dispositif de réglage extérieur 90.

L'outillage de réglage peut être un arbre, ajouré afin d'éviter tout contact entre cet arbre et les autres miroirs présents dans la structure creuse au moment du montage (et du démontage une fois le réglage effectué). L'outillage relai est ensuite retiré de l'intérieur de la structure creuse. Dans l'art antérieur le miroir M2 est relié via 3 lames à un hexapode qui reste à poste derrière le M2 et coupe du flux provenant de l'objet pendant le réglage des optiques. Pouvoir réaliser le positionnement du M2 avec un hexapode disposé du côté arrière qui est ensuite retiré permet au télescope selon l'invention de récupérer plus de flux issu de l'objet lors du réglage.

**Revendications**

1. Télescope (10) anastigmat à trois miroirs asphériques de type Korsh comprenant au moins un premier miroir (M1) concave présentant une ouverture centrale (Ac), un second miroir (M2) convexe disposé à l'avant du premier miroir, un troisième miroir (M3) concave, au moins un premier miroir de renvoi (MR1) et un détecteur (D),

   - les miroirs étant agencés de sorte que le premier miroir (M1) et le second miroir (M2) forment d'un objet à l'infini une image intermédiaire située entre le second miroir et le troisième miroir, le troisième miroir (M3) formant de cette image intermédiaire une image finale dans le plan focal du télescope dans lequel est placé le détecteur (D),
   le télescope comprenant en outre :

      - une structure porteuse (50) présentant une première face sur laquelle est fixé le premier miroir (M1),
      - une structure creuse (40) de forme allongée selon une direction sensiblement perpendiculaire au plan ($P_{AC}$) de l'ouverture centrale (Ac), limitée par des parois, à l'intérieur de laquelle sont fixés le deuxième miroir (M2) dans une partie de la structure creuse située à l'avant du premier miroir, et au moins un autre miroir (M3, MR1) choisi parmi le troisième miroir (M3) et l'au moins un miroir de renvoi (MR1),
      lesdites parois présentant au moins une première ouverture (Ap1) de manière à laisser passer un faisceau lumineux issu de l'objet provenant du premier miroir et se dirigeant vers le deuxième miroir,
      - ladite structure porteuse (50) comprenant en outre des moyens de fixation de la structure creuse (40) à ladite structure porteuse (50),
      - la structure porteuse (50) présentant une partie avant (20) creuse traversant l'ouverture centrale (Ac) et entourant une partie de la structure creuse (40), lesdits moyens de fixation étant disposés au niveau de ladite partie avant (20) de la structure porteuse (50).

2. Télescope selon la revendication 1 dans lequel la structure porteuse (50) est monobloc.

3. Télescope selon l'une des revendications précédentes comprenant en outre un bâti arrière (70) et dans lequel la structure porteuse (50) est fixée audit bâti arrière (70).

4. Télescope selon l'une des revendications précédentes dans lequel les parois de la structure creuse comprennent au moins une deuxième ouverture (Ap2) de manière à laisser passer un faisceau lumineux issu d'un miroir fixé à l'intérieur de la structure creuse (40) et se dirigeant vers le miroir suivant de la combinaison optique disposé à l'extérieur de la structure creuse.

5. Télescope selon l'une des revendications précédentes dans lequel les moyens de fixation sont constitués de colle (36), injectée via des trous d'injection réalisés dans la partie avant (20) de la structure porteuse.

6. Télescope selon l'une des revendications précédentes dans lequel la structure creuse (40) allongée traverse l'ouverture centrale, présentant ainsi une partie (45) située à l'arrière du premier miroir (M1).

7. Télescope selon la revendication 6 comprenant en outre une structure de support (60) fixée à la partie (45) de la structure creuse (40) située à l'arrière du premier miroir, et sur laquelle sont fixés un ou plusieurs éléments du télescope le cas échéant.

8. Télescope selon les revendications 6 ou 7 dans lequel l'au moins un autre miroir fixé à l'intérieur de la structure creuse est le premier miroir de renvoi (MR1), disposé dans la partie (45) de la structure creuse (40) située à l'arrière du premier miroir (M1).

9. Télescope selon l'une des revendications 1 à 7 dans lequel l'au moins un autre miroir fixé à l'intérieur de la structure creuse est le troisième miroir (M3).

10. Télescope selon la revendication 9 dans lequel le troisième miroir (M3) est disposé sensiblement dans le plan ($P_{Ac}$) de l'ouverture centrale (Ac) du premier miroir (M1).

11. Télescope selon la revendication 10 dans lequel on définit une première distance ($d_{12}$) comme la distance entre le premier (M1) et le deuxième (M2) miroir et une deuxième distance ($d_{23}$) comme la distance entre le deuxième miroir et le troisième miroir et dans lequel ladite deuxième distance est comprise entre 90% et 150 % de ladite première distance.

12. Télescope selon l'une des revendications 10 ou 11 dans lequel le premier miroir de renvoi (MR1) est également fixé à l'intérieur de la structure creuse (50) dans la partie de la structure creuse située à l'avant du premier miroir.

13. Télescope selon l'une des revendications 1 à 5 dans lequel l'au moins autre miroir fixé à l'intérieur de la structure creuse (40) est le premier miroir de renvoi (MR1) et dans lequel le troisième miroir (M3) est disposé sensiblement dans le plan ($P_{Ac}$) de l'ouverture centrale (Ac) du premier miroir (M1) et est fixé à la structure porteuse (50).

14. Télescope selon la revendication 13 dans lequel la structure porteuse (50) présente une partie arrière (55) creuse à l'extérieur de laquelle est fixé le détecteur (D).

15. Télescope selon l'une des revendications précédentes dans lequel un miroir de renvoi est disposé sensiblement dans une pupille de sortie du télescope et est actif.

16. Télescope selon l'une des revendications 1 à 14 dans lequel un miroir de renvoi est disposé sensiblement dans une pupille de sortie du télescope, est asphérique et adapté à une première focale du télescope, et est escamotable de manière à être remplacé par au moins un autre miroir de renvoi adapté pour respectivement une autre focale, différente de la première focale.

17. Procédé (100) de fabrication d'un télescope de type Korsh anastigmat à trois miroirs asphériques comprenant au moins un premier miroir (M1) concave présentant une ouverture centrale (Ac), un second miroir (M2) convexe, un troisième miroir (M3) concave, au moins un premier miroir de renvoi (MR1) et un détecteur (D), les miroirs étant agencés de sorte que le premier miroir (M1) et le second miroir (M2) forment d'un objet à l'infini une image intermédiaire située entre le second miroir et le troisième miroir, le troisième miroir (M3) formant de cette image intermédiaire une image finale dans le plan focal du télescope dans lequel est placé le détecteur (D), le procédé comprenant les étapes consistant à :

- fournir (110) une structure porteuse (50) présentant une première face sur laquelle est fixé le premier miroir (M1) et présentant une partie avant creuse (20) traversant l'ouverture centrale du premier miroir,
- fournir (120) une structure creuse (40) de forme allongée et limitée par des parois, à l'intérieur de laquelle sont fixés le deuxième miroir (M2) et au moins un autre miroir (M3, MR1) choisi parmi le troisième miroir (M3) et l'au moins un miroir de renvoi (MR1), lesdites parois de la structure creuse présentant au moins une première ouverture (Ap1),
- insérer (130) la structure creuse (40) dans la partie avant creuse (20) de la structure porteuse,
- positionner (140) ladite structure creuse (40) par rapport à la structure porteuse (50) selon une direction sensiblement perpendiculaire au plan de l'ouverture centrale avec un dispositif de réglage en position (90), de sorte que le deuxième miroir (M2) soit positionné à l'avant du premier miroir (M1) à une position déterminée par rapport au premier miroir (M1), la première ouverture étant configurée de manière à laisser passer un faisceau lumineux issu de l'objet, provenant du premier miroir et se dirigeant vers le deuxième miroir,
- fixer (150) la structure creuse à la structure porteuse par des moyens de fixation mis en œuvre à partir de la partie avant de la structure porteuse,
- retirer (160) le dispositif de réglage en position (90).

18. procédé selon la revendication 17 dans lequel l'étape de positionnement consiste à glisser puis fixer provisoirement à l'intérieur de la structure creuse un outillage relais (95) relié à un dispositif de réglage extérieur (96) à la structure permettant un réglage selon 6 degrés de liberté, puis à régler ladite position.

19. Procédé selon l'une des revendications 17 ou 18 dans lequel l'étape de fixation consiste à injecter une colle via des trous d'injection disposés dans la partie avant de la structure porteuse.

**Patentansprüche**

1. Anastigmat-Teleskop (10) mit drei asphärischen Spiegeln vom Korsch-Typ, das mindestens einen ersten konkaven Spiegel (M1) mit einer zentralen Apertur (Ac), einen vor dem ersten Spiegel angeordneten zweiten konvexen Spiegel (M2), einen dritten konkaven Spiegel (M3), mindestens einen ersten Umlenkspiegel (MR1) und einen Detektor (D) umfasst,

   - wobei die Spiegel so angeordnet sind, dass der erste Spiegel (M1) und der zweite Spiegel (M2) von einem Objekt im Unendlichen ein Zwischenbild bilden, das sich zwischen dem zweiten Spiegel und dem dritten Spiegel befindet, wobei der dritte Spiegel (M3) von diesem Zwischenbild ein endgültiges Bild in der Brennebene des Teleskops bildet, in der der Detektor (D) platziert ist,
   wobei das Teleskop ferner Folgendes umfasst:

      - eine Tragstruktur (50) mit einer ersten Seite, auf der der erste Spiegel (M1) befestigt ist,
      - eine Hohlstruktur (40) mit einer in einer Richtung im Wesentlichen lotrecht zur Ebene ($P_{AC}$) der zentralen Apertur (Ac) verlängerten Form, durch Wände begrenzt, in deren Innerem der zweite Spiegel (M2) in einem vor dem ersten Spiegel befindlichen Teil der Hohlstruktur und mindestens ein weiterer Spiegel (M3, MR1) befestigt sind, ausgewählt aus dem dritten Spiegel (M3) und dem mindestens einen Umlenkspiegel (MR1),
      wobei die Wände mindestens eine erste Apertur (Ap1) aufweisen, um einen von dem Objekt ausgehenden Lichtstrahl durchzulassen, der von dem ersten Spiegel kommt und auf den zweiten Spiegel gerichtet ist,
      - wobei die Tragstruktur (50) ferner Befestigungsmittel der Hohlstruktur (40) an der Tragstruktur (50) umfasst,
      - wobei die Tragstruktur (50) einen hohlen vorderen Teil (20) aufweist, der durch die zentrale Apertur (Ac) verläuft und einen Teil der Hohlstruktur (40) umgibt, wobei die Befestigungsmittel am vorderen Teil (20) der Tragstruktur (50) angeordnet sind.

2. Teleskop nach Anspruch 1, wobei die Tragstruktur (50) einstückig ist.

3. Teleskop nach einem der vorherigen Ansprüche, das ferner einen hinteren Rahmen (70) aufweist und wobei die Tragstruktur (50) an dem hinteren Rahmen (70) befestigt ist.

4. Teleskop nach einem der vorherigen Ansprüche, wobei die Wände der Hohlstruktur mindestens eine zweite Apertur (Ap2) aufweisen, um einen Lichtstrahl durchzulassen, der von einem innerhalb der Hohlstruktur (40) befestigten Spiegel ausgeht und auf den nächsten Spiegel der außerhalb der Hohlstruktur angeordneten optischen Kombination gerichtet ist.

5. Teleskop nach einem der vorherigen Ansprüche, wobei die Befestigungsmittel aus Klebstoff (36) bestehen, der durch Einspritzlöcher im vorderen Teil (20) der Tragstruktur eingespritzt wird.

6. Teleskop nach einem der vorherigen Ansprüche, wobei die verlängerte Hohlstruktur (40) durch die zentrale Apertur verläuft und einen hinter dem ersten Spiegel (M1) befindlichen Teil (45) aufweist.

7. Teleskop nach Anspruch 6, das ferner eine Tragstruktur (60) umfasst, die an dem hinter dem ersten Spiegel befindlichen Teil (45) der Hohlstruktur (40) befestigt ist und an der gegebenenfalls ein oder mehrere Elemente des Teleskops befestigt sind.

8. Teleskop nach Anspruch 6 oder 7, wobei der innerhalb der Hohlstruktur befestigte mindestens eine weitere Spiegel der erste Umlenkspiegel (MR1) ist, der in dem hinter dem ersten Spiegel (M1) befindlichen Teil (45) der Hohlstruktur (40) angeordnet ist.

9. Teleskop nach einem der Ansprüche 1 bis 7, wobei der im Inneren der Hohlstruktur befestigte mindestens eine weitere Spiegel der dritte Spiegel (M3) ist.

10. Teleskop nach Anspruch 9, wobei der dritte Spiegel (M3) im Wesentlichen in der Ebene ($P_{Ac}$) der zentralen Apertur (Ac) des ersten Spiegels (M1) angeordnet ist.

11. Teleskop nach Anspruch 10, wobei ein erster Abstand ($d_{12}$) als der Abstand zwischen dem ersten (M1) und dem zweiten (M2) Spiegel und ein zweiter Abstand ($d_{23}$) als der Abstand zwischen dem zweiten Spiegel und dem dritten Spiegel definiert ist, und wobei der zweite Abstand zwischen 90 % und 150 % des ersten Abstands beträgt.

12. Teleskop nach Anspruch 10 oder 11, wobei der erste Umlenkspiegel (MR1) ebenfalls innerhalb der Hohlstruktur (50) in dem vor dem ersten Spiegel befindlichen Teil der Hohlstruktur befestigt ist.

13. Teleskop nach einem der Ansprüche 1 bis 5, wobei der innerhalb der Hohlstruktur (40) befestigte mindestens eine weitere Spiegel der erste Umlenkspiegel (MR1) ist und wobei der dritte Spiegel (M3) im Wesentlichen in der Ebene ($P_{Ac}$) der zentralen Apertur (Ac) des ersten Spiegels (M1) angeordnet und an der Tragstruktur (50) befestigt ist.

14. Teleskop nach Anspruch 13, wobei die Tragstruktur (50) einen hohlen hinteren Teil (55) aufweist, an dessen Außenseite der Detektor (D) befestigt ist.

15. Teleskop nach einem der vorherigen Ansprüche, wobei ein Umlenkspiegel im Wesentlichen in einer Austrittspupille des Teleskops angeordnet und aktiv ist.

16. Teleskop nach einem der Ansprüche 1 bis 14, wobei ein Umlenkspiegel im Wesentlichen in einer Austrittspupille des Teleskops angeordnet ist, asphärisch und auf eine erste Brennweite des Teleskops abgestimmt und einklappbar ist, so dass er durch mindestens einen weiteren Umlenkspiegel ersetzt werden kann, der auf jeweils eine andere, sich von der ersten Brennweite unterscheidende Brennweite abgestimmt ist.

17. Verfahren (100) zur Herstellung eines Anastigmat-Teleskops vom Korsch-Typ mit drei asphärischen Spiegeln, das mindestens einen ersten konkaven Spiegel (M1) mit einer zentralen Apertur (Ac), einen zweiten konvexen Spiegel (M2), einen dritten konkaven Spiegel (M3), mindestens einen ersten Umlenkspiegel (MR1) und einen Detektor (D) umfasst, wobei die Spiegel so angeordnet sind, dass der erste Spiegel (M1) und der zweite Spiegel (M2) von einem Objekt im Unendlichen ein Zwischenbild bilden, das sich zwischen dem zweiten Spiegel und dem dritten Spiegel befindet, wobei der dritte Spiegel (M3) von diesem Zwischenbild ein endgültiges Bild in der Brennebene des Teleskops bildet, in der der Detektor (D) platziert ist,
wobei das Verfahren die folgenden Schritte beinhaltet:

- Bereitstellen (110) einer Tragstruktur (50) mit einer ersten Seite, auf der der erste Spiegel (M1) befestigt ist, und mit einem hohlen vorderen Teil (20), der durch die zentrale Apertur des ersten Spiegels verläuft,
- Bereitstellen (120) einer Hohlstruktur (40) mit einer länglichen Form, durch Wände begrenzt, in deren Innerem der zweite Spiegel (M2) und mindestens ein weiterer Spiegel (M3, MR1), ausgewählt aus dem dritten Spiegel (M3) und dem mindestens einen Umlenkspiegel (MR1), befestigt sind, wobei die Wände der Hohlstruktur mindestens eine erste Apertur (Ap1) aufweisen,
- Einsetzen (130) der Hohlstruktur (40) in den vorderen hohlen Teil (20) der Tragstruktur,
- Positionieren (140) der Hohlstruktur (40) in Bezug auf die Tragstruktur (50) in einer Richtung im Wesentlichen lotrecht zur Ebene der zentralen Apertur mit einer Positionseinstellvorrichtung (90), so dass der zweite Spiegel (M2) vor dem ersten Spiegel (M1) in einer bestimmten Position in Bezug auf den ersten Spiegel (M1) positioniert ist, wobei die erste Apertur so konfiguriert ist, dass sie einen von dem Objekt ausgehenden Lichtstrahl durchlässt, der von dem ersten Spiegel kommt und auf den zweiten Spiegel gerichtet ist,
- Befestigen (150) der Hohlstruktur an der Tragstruktur mit Befestigungsmitteln, die von der Vorderseite der Tragstruktur aus angebracht werden,
- Entfernen (160) der Positionseinstellvorrichtung (90).

18. Verfahren nach Anspruch 17, wobei der Positionierungsschritt darin besteht, ein Relaiswerkzeug (95), das mit einer außerhalb der Struktur befindlichen Einstellvorrichtung (96) verbunden ist, die eine Einstellung mit 6 Freiheitsgraden ermöglicht, in das Innere der Hohlstruktur zu schieben und dort provisorisch zu befestigen, und dann die Position einzustellen.

19. Verfahren nach einem der Ansprüche 17 oder 18, wobei der Befestigungsschritt darin besteht, einen Klebstoff durch im vorderen Teil der Tragstruktur angeordnete Einspritzlöcher einzuspritzen.

**Claims**

1. An anastigmat Korsch telescope (10) with three aspherical mirrors comprising at least one first concave mirror (M1) having a central aperture (Ac), a second convex mirror (M2) arranged in front of the first mirror, a third concave mirror (M3), at least one first deflecting mirror (MR1) and a detector (D),

- the mirrors being arranged so that the first mirror (M1) and the second mirror (M2) form an intermediate image of an object at infinity, the image being located between the second mirror and the third mirror, the third mirror (M3) forming a final image of this intermediate image in the focal plane of the telescope wherein the detector (D) is placed,
the telescope further comprising:

- a bearing structure (50) having a first face to which the first mirror (M1) is attached,
- a hollow structure (40) of a shape elongated in a direction substantially perpendicular to the plane ($P_{AC}$) of the central aperture (Ac), limited by walls, attached to the inside of which are the second mirror (M2) in a portion of the hollow structure located in front of the first mirror, and at least one other mirror (M3, MR1) selected from the third mirror (M3) and the at least one deflecting mirror (MR1),

said walls having at least one first aperture (Ap1) so as to allow a light beam coming from the object, originating from the first mirror and heading toward the second mirror, to pass through,

- said bearing structure (50) further comprising means of attachment of the hollow structure (40) to said bearing structure (50),
- the bearing structure (50) having a hollow front portion (20) traversing the central aperture (Ac) and surrounding a portion of the hollow structure (40), said means of attachment being arranged at the level of said front portion (20) of the bearing structure (50).

2. The telescope according to claim 1, wherein the bearing structure (50) is in one piece.

3. The telescope according to one of the preceding claims, further comprising a rear frame (70) and wherein the bearing structure (50) is attached to said rear frame (70).

4. The telescope according to one of the preceding claims, wherein the walls of the hollow structure comprise at least one second aperture (Ap2) so as to allow a light beam to pass through coming from a mirror attached to the inside of the hollow structure (40) and heading toward the next mirror of the optical combination arranged outside the hollow structure.

5. The telescope according to one of the preceding claims, wherein the means of attachment consist of adhesive (36) injected via injection holes made in the front portion (20) of the bearing structure.

6. The telescope according to one of the preceding claims, wherein the elongated hollow structure (40) also traverses the central aperture, thus having one portion (45) located behind the first mirror (M1).

7. The telescope according to claim 6, further comprising a support structure (60) attached to the portion (45) of the hollow structure (40) located behind the first mirror, and to which are attached one or more elements of the telescope where applicable.

8. The telescope according to claim 6 or 7, wherein the at least one other mirror attached to the inside of the hollow structure is the first deflecting mirror (MR1), arranged in the portion (45) of the hollow structure (40) located behind the first mirror (M1).

9. The telescope according to one of claims 1 to 7, wherein the at least one other mirror attached to the inside of the hollow structure is the third mirror (M3).

10. The telescope according to claim 9, wherein the third mirror (M3) is substantially arranged in the plane ($P_{Ac}$) of the central aperture (Ac) of the first mirror (M1).

11. The telescope according to claim 10, wherein a first distance ($d_{12}$) is defined as the distance between the first (M1) and the second (M2) mirror and a second distance ($d_{23}$) as the distance between the second mirror and the third mirror and wherein said second distance is between 90% and 150% of said first distance.

12. The telescope according to one of claims 10 or 11, wherein the first deflecting mirror (MR1) is also attached to the inside of the hollow structure (50) in the portion of the hollow structure located in front of the first mirror.

13. The telescope according to one of claims 1 to 5, wherein the at least one other mirror attached to the inside of the hollow structure (40) is the first deflecting mirror (MR1) and wherein the third mirror (M3) is substantially arranged in the plane ($P_{Ac}$) of the central aperture (Ac) of the first mirror (M1) and is attached to the bearing structure (50).

14. The telescope according to claim 13, wherein the bearing structure (50) has a rear hollow portion (55) to the outside of which the detector (D) is attached.

15. The telescope according to one of the preceding claims, wherein a deflecting mirror is substantially arranged in an exit pupil of the telescope and is active.

16. The telescope according to one of claims 1 to 14, wherein a deflecting mirror is substantially arranged in an exit pupil of the telescope, is aspherical and adapted to a first focal length of the telescope, and is retractable so as to be replaced by at least one other deflecting mirror adapted respectively to another focal length, different from the first focal length.

17. A method (100) of manufacturing an anastigmat Korsch telescope with three aspherical mirrors comprising at least one first concave mirror (M1) having a central aperture (Ac), a second convex mirror (M2), a third concave mirror (M3), at least one first deflecting mirror (MR1) and a detector (D), the mirrors being arranged so that the first mirror (M1) and the second mirror (M2) form an intermediate image of an object at infinity, the image being located between the second mirror and the third mirror, the third mirror (M3) forming a final image of this intermediate image in the focal plane of the telescope wherein the detector (D) is placed, the method comprising the steps of:

- providing (110) a bearing structure (50) having a first face to which the first mirror (M1) is attached and having a hollow front portion (20) traversing the central aperture of the first mirror,
- providing (120) a hollow structure (40) of elongated shape and limited by walls, attached to the inside of which are the second mirror (M2) and at least one other mirror (M3, MR1) selected from the third mirror (M3) and the at least one deflecting mirror (MR1), said walls of the hollow structure having at least one first aperture (Ap1),
- inserting (130) the hollow structure (40) into the front hollow portion (20) of the bearing structure,
- positioning (140) said hollow structure (40) with respect to the bearing structure (50) in a direction substantially perpendicular to the plane of the central aperture with a position adjustment device (90), so that the second mirror (M2) is positioned in front of the first mirror (M1) at a determined position with respect to the first mirror (M1), the first aperture being configured so as to allow a light beam to pass through coming from the object, originating from the first mirror and heading toward the second mirror,
- attaching (150) the hollow structure to the bearing structure by means of attachment implemented from the front portion of the bearing structure,
- withdrawing (160) the position adjustment device (90).

18. The method according to claim 17, wherein the positioning step consists in sliding then temporarily attaching to the inside of the hollow structure an intermediary tool (95) connected to an adjustment device (96) outside the structure allowing an adjustment with 6 degrees of freedom, then adjusting said position.

19. The method according to one of claims 17 or 18, wherein the attachment step consists in injecting an adhesive via injection holes arranged in the front portion of the bearing structure.

FIG.1

EP 3 474 055 B1

FIG.2

FIG.3a

FIG.3b

EP 3 474 055 B1

FIG.3c

EP 3 474 055 B1

FIG.4

FIG.5

FIG.6

FIG.7

EP 3 474 055 B1

FIG.8

FIG.9a

FIG.9b

FIG.9c

FIG.10

EP 3 474 055 B1

FIG.11

FIG.12

EP 3 474 055 B1

FIG.12 bis

100

```
┌─────────────────────────────────┐
│  Fournir une structure porteuse avec  │ ⟋ 110
│  une partie avant creuse traversant   │
│  Ac et sur laquelle est fixé M1       │
└─────────────────────────────────┘
                 │
                 ▼
┌─────────────────────────────────┐
│   Fournir une structure creuse        │ ⟋ 120
│   allongée à laquelle est fixé        │
│   M2 et [M3 ou MR1]                    │
└─────────────────────────────────┘
                 │
                 ▼
┌─────────────────────────────────┐
│   Insérer la structure creuse dans la │ ⟋ 130
│   partie creuse de la structure       │
│   porteuse                            │
└─────────────────────────────────┘
                 │
                 ▼
┌─────────────────────────────────┐
│   Positionner la structure creuse par │ ⟋ 140
│   rapport à la structure porteuse à l'aide │
│   d'un dispositif de réglage en position │
└─────────────────────────────────┘
                 │
                 ▼
┌─────────────────────────────────┐
│     Fixer la structure creuse à la    │ ⟋ 150
│         structure porteuse            │
└─────────────────────────────────┘
                 │
                 ▼
┌─────────────────────────────────┐
│  Retirer le dispositif de réglage en position │ ⟋ 160
└─────────────────────────────────┘
```

FIG.13

FIG.14

EP 3 474 055 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3443853 A

- FR 1700254